# EUROPÄISCHE PATENTSCHRIFT

(11) **EP 1 873 882 B1**
(45) Veröffentlichungstag und Bekanntmachung des Hinweises auf die Patenterteilung: **04.08.2010**
(21) Anmeldenummer: 07012569.5
(22) Anmeldetag: 27.06.2007
(51) Int. Cl.: H02G 3/30

(54) **Befestigungsvorrichtung für eine Leitung**
Mounting device for a conduit
Dispositif de fixation pour une conduite

(30) Priorität: 29.06.2006 DE 202006010110 U
(43) Veröffentlichungstag der Anmeldung: 02.01.2008
(73) Patentinhaber: TRW Automotive Electronics & Components GmbH, 78315 Radolfzell (DE)
(72) Erfinder: Antoine, Hervé, 57370 Phalsbourg (FR)
(74) Vertreter: Prinz & Partner

(56) Entgegenhaltungen:
- EP-A- 0 145 238
- EP-A- 1 286 094
- EP-A- 1 424 520
- DE-A1- 19 539 496

## Beschreibung

Die Erfindung betrifft eine Befestigungsvorrichtung für eine Leitung, mit einer länglichen Schiene und einem Befestigungsabschnitt, der eine Axialrichtung definiert, wobei die Schiene auf einer Oberseite eine Auflagefläche für die Leitung aufweist und der Befestigungsabschnitt auf der der Oberseite entgegengesetzten Unterseite angeordnet ist.

Eine solche Befestigungsvorrichtung ist aus der DE 20 2005 007 476 U1 bekannt. Diese Befestigungsvorrichtung ist einteilig ausgeführt. Aufgrund der Längsbeweglichkeit der Schiene ist eine Justage möglich, was die Montage an einer Fahrzeugkarosserie erleichtert.

Auch das aus der DE 39 33 305 A1 bekannte mehrteilige Halteelement mit einem zwischen einem Träger und einem Befestigungsbereich vorgesehenen Zwischenelement erlaubt einen Toleranzausgleich in gewissen Grenzen.

Eine Befestigungsvorrichtung mit den Merkmalen des Oberbegriffs des Anspruchs 1 ist aus der EP 0 145 238 A2 bekannt. Ein Grundkörper, der mit einem Träger verschweißt wird, weist eine Öffnung auf, in der sich ein Befestigungselement seitlich bewegen kann, um einen verbesserten Toleranzausgleich bei der Montage einer Platte oder eines Verkleidungsteils am Träger zu ermöglichen.

Die EP 1 424 520 A1 zeigt eine Befestigungsvorrichtung für einen Kabelbaum mit einem Halter und einem mit dem Halter verbindbaren Befestigungselement zur Befestigung des Halters an einem Bauteil. Durch eine in Längsrichtung auf den Halter wirkende Kraft kann der Halter nach Überwindung eines Abschnittswiderstands gegenüber dem Befestigungselement verschoben werden, um Lagerabweichungen zwischen der Position der Halters am Kabelbaum und der das Befestigungselement aufnehmenden Öffnung im Bauteil auszugleichen.

Die Erfindung schafft eine praktisch handhabbare Befestigungsvorrichtung, die einen bestmöglichen Toleranzausgleich bietet.

Gemäß der Erfindung ist bei einer Befestigungsvorrichtung der eingangs genannten Art vorgesehen, daß der Befestigungsabschnitt in einem Rahmen verschiebbar gehalten ist. Ein Rahmen eignet sich hervorragend als "Lager" für den Befestigungsabschnitt, da er auf einfache Weise eine begrenzte Beweglichkeit in mehreren Richtungen ermöglicht.

Die Längsführung des Befestigungsabschnitts wird durch einen auf der Unterseite der Schiene angeformten Führungsnocken, der einem im Querschnitt U-förmigen Profil des Befestigungsabschnitts gegenüberliegt, zumindest unterstützt.

Vorzugsweise ist der Rahmen zusammen mit der Schiene einstückig ausgeführt.

Die erfindungsgemäße Befestigungsvorrichtung kommt ohne Aussparung in der Schiene aus. Besonders vorteilhaft ist eine Ausgestaltung, bei der die Auflagefläche für die Leitung durchgehend ausgebildet ist. Somit ist eine optimale Leitungsführung gewährleistet.

Bei der bevorzugten Ausführungsform der erfindungsgemäßen Befestigungsvorrichtung weist der Befestigungsabschnitt Stege auf, die sich senkrecht zur Längsrichtung der Schiene erstrecken und in den Rahmen hineinragen.

Vorzugsweise bilden die Seitenwände des Rahmens wenigstens einen Anschlag für die Stege, um die Längs- und/oder axiale Beweglichkeit des Befestigungsabschnitts zu begrenzen.

Zur Festlegung einer Normalstellung des Befestigungsabschnitts kann der Rahmen einander gegenüberliegende Vorsprünge aufweisen, die zusammen mit den Stegen eine Rastposition des Befestigungsabschnitts definieren.

Um eine Bewegung des Befestigungsabschnitts aus der Normalstellung heraus zu ermöglichen, ist der Abstand zwischen den Vorsprüngen vorzugsweise nur geringfügig kleiner als die entsprechenden Abmessungen der Stege.

Die Seitenwände des Rahmens können vorteilhaft auch einen Anschlag für das Profil des Befestigungsabschnitts bilden.

Weitere Merkmale und Vorteile ergeben sich aus den Unteransprüchen. Die Erfindung wird nachfolgend anhand einer bevorzugten Ausführungsform beschrieben, die in den Zeichnungen dargestellt ist. In den Zeichnungen zeigen:
- Figur 1 eine Längsseitenansicht einer erfindungsgemäßen Befestigungsvorrichtung nach einer ersten Ausführungsform;
- Figur 2 eine Stirnseitenansicht der Befestigungsvorrichtung aus Figur 1;

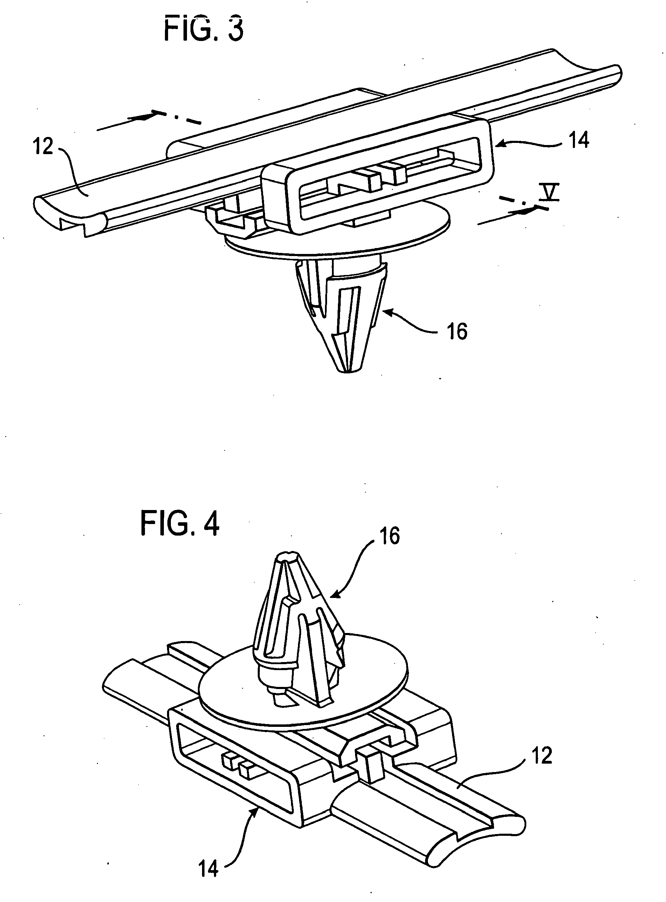

- Figur 3 eine perspektivische Draufsicht auf die Befestigungsvorrichtung aus Figur 1;
- Figur 4 eine perspektivische Unteransicht der Befestigungsvorrichtung aus Figur 1;

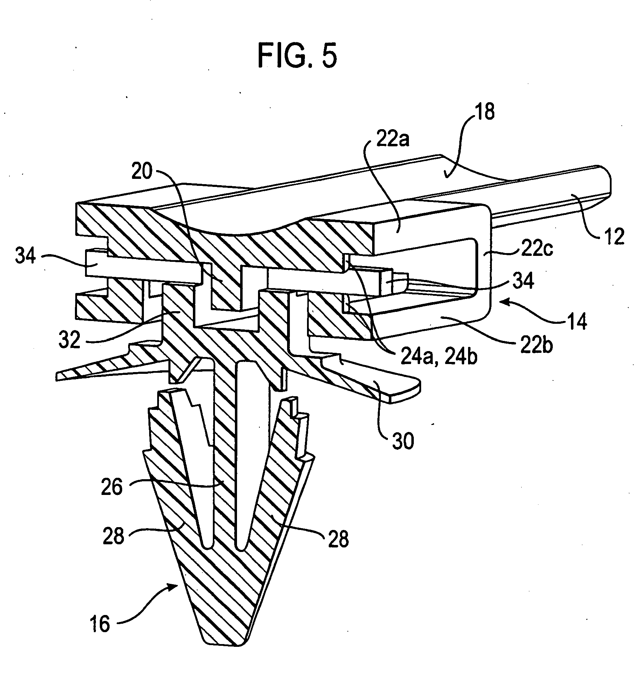

- Figur 5 eine perspektivische Schnittansicht in der Ebene V in Figur 3;
- Figur 6 eine Längsseitenansicht einer erfindungsgemäßen Befestigungsvorrichtung nach einer zweiten Ausführungsform;
- Figur 7 eine Stirnseitenansicht der Befestigungsvorrichtung aus Figur 6;
- Figur 8 eine perspektivische Draufsicht auf die Befestigungsvorrichtung aus Figur 6;
- Figur 9 eine perspektivische Unteransicht der Befestigungsvorrichtung aus Figur 6; und
- Figur 10 eine perspektivische Schnittansicht in der Ebene X in Figur 8.

In den Figuren ist eine Befestigungsvorrichtung 10 für eine Leitung (nicht gezeigt) mit einer länglichen, rinnenförmigen Schiene 12, einem Rahmen 14 und einem Befestigungsabschnitt 16 dargestellt. Die Schiene 12 ist zusammen mit dem Rahmen 14 einstückig ausgeführt. Auch der relativ zu Schiene 12 und Rahmen 14 bewegliche Befestigungsabschnitt 16 ist einstückig ausgeführt. Die gesamte Befestigungsvorrichtung 10 ist in einem Ein-Zyklus-Spritzgußverfahren aus demselben Kunststoff hergestellt, d.h. alle Bestandteile der Befestigungsvorrichtung 10 werden in einem einzigen Spritzvorgang bereits in ihrer Gebrauchsstellung gebildet und müssen nicht nachträglich zusammengebaut werden.

Die rinnenförmige Schiene 12 weist auf ihrer Oberseite eine über ihre gesamte Länge durchgehende Auflagefläche 18 für die Leitung auf. Die Leitung kann z.B. mit einem Kabelbinder oder mit einer Kabelschelle an der Schiene 12 befestigt werden.

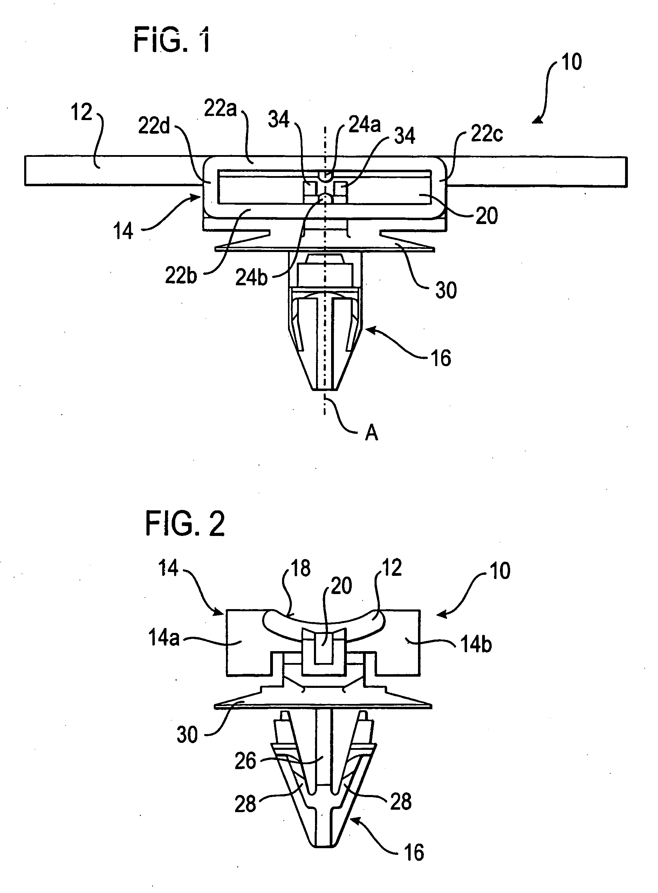

Im mittleren Bereich der Schiene 12 ist auf deren Unterseite ein Führungsnocken 20 angeformt, der sich in Längsrichtung der Schiene 12 erstreckt. Im selben mittleren Bereich der Schiene 12 ist auf deren beiden Längsseiten ein Rahmenabschnitt 14a bzw. 14b mit vier Seitenwänden 22a, 22b, 22c, 22d angeformt. Die beiden Rahmenabschnitte 14a, 14b werden im folgenden als Rahmen 14 zusammengefaßt. Der Rahmen 14 begrenzt - gemäß der Darstellung der Figur 1 - einen horizontalen Freiheitsgrad (in Längsrichtung der Schiene 12) und einen vertikalen Freiheitsgrad des weiter unten genauer beschriebenen Befestigungsabschnitts 16. An den oberen und unteren Seitenwänden 22a, 22b des Rahmens 14 sind jeweils einander gegenüberliegende Vorsprünge 24a, 24b gebildet, die sich vom Führungsnocken 20 senkrecht nach außen erstrecken und eine Mittelposition bezüglich der Längserstreckung der Schiene 12 vorgeben.

Der Befestigungsabschnitt 16 hat eine Mittelachse A und weist im unteren Bereich einen Mittelsteg 26 und zwei schräg nach oben gerichtete Arme 28 auf. Die elastisch nachgiebigen Arme 28 können hinter eine Trägeröffnung einer Fahrzeugkarosserie eingreifen und dadurch die Befestigungsvorrichtung 10 am Rand der Trägeröffnung arretieren. An den Mittelsteg 26 ist oberhalb der Arme 28 ein Federteller 30 angeformt, der bei der Montage gegen die Fahrzeugkarosserie gedrückt wird und aufgrund seiner Elastizität die Trägeröffnung abdichtet und zudem für eine Geräuschdämpfung sorgt.

Oberhalb des Federtellers 30 weist der Befestigungsabschnitt 16 ein im Querschnitt U-förmiges Profil 32 auf, das dem Führungsnocken 20 gegenüberliegt. An der Oberseite des Profils 32 sind zwei Stegpaare 34 angeformt, die sich senkrecht zur Längsrichtung vom Profil 32 weg erstrecken und in den Rahmen 14 hineinragen. Auf diese Weise ist der Befestigungsabschnitt 16 unverlierbar, aber dennoch beweglich an der Schiene 12 gehalten.

In der Normalposition des Befestigungsabschnitts 16 befinden sich die gegenüberliegenden Vorsprünge 24a, 24b zwischen den Stegpaaren 34. Abhängig vom Abstand der beiden Stege 34 jeden Paares ist dadurch eine geringe Beweglichkeit des Befestigungsabschnitts 16 in Längsrichtung der Schiene 12 gewährleistet. Da der vertikale Abstand zwischen den Vorsprüngen 24a, 24b nur geringfügig kleiner als die vertikale Abmessung der Stege 34 ist und sowohl die Vorsprünge 24a, 24b als auch die Stege 34 elastisch verformbar sind, kann der Befestigungsabschnitt 16 unter einem bestimmten Kraftaufwand in Längsrichtung der Schiene 12 aus seiner Normalposition herausbewegt werden. Der Führungsnocken 20 und das Profil 32 des Befestigungsabschnitts 16 unterstützen dabei die Längsführung des Befestigungsabschnitts 16.

Die Beweglichkeit in Längsrichtung der Schiene 12 ist ebenso wie die Beweglichkeit in vertikaler Richtung (Axialrichtung des Befestigungsabschnitts 16) durch die Seitenwände 22a, 22b, 22c, 22d des Rahmens 14 begrenzt, die einen Anschlag für die Stege 34 bilden. Der Befestigungsabschnitt 16 kann auch quer zur Schiene 12 verschoben werden. Diese Beweglichkeit ist ebenfalls durch die Seitenwände 22a, 22b, 22c, 22d begrenzt, deren dem Führungsnocken 20 zugewandte Seiten einen Anschlag für die Außenwand des Profils 32 des Befestigungsabschnitts 16 bilden. Darüber hinaus ist ein Verkippen des Befestigungsabschnitts 16 relativ zur Schiene 12 in alle Richtungen möglich.

Beim Anbringen der Befestigungsvorrichtung 10 an der Fahrzeugkarosserie befindet sich der Befestigungsabschnitt 16 in seiner Normalstellung. Falls erforderlich, kann die Schiene 12 vor allem in Längsrichtung, aber auch quer dazu verschoben und gegebenenfalls verkippt werden, so daß ein bestmöglicher Toleranzausgleich gewährleistet ist. Bei der bevorzugten Ausführungsform der erfindungsgemäßen Befestigungsvorrichtung 10 ist, ausgehend von der Normalposition, eine Längsverschiebung von bis zu 7 mm in beiden Richtungen möglich.

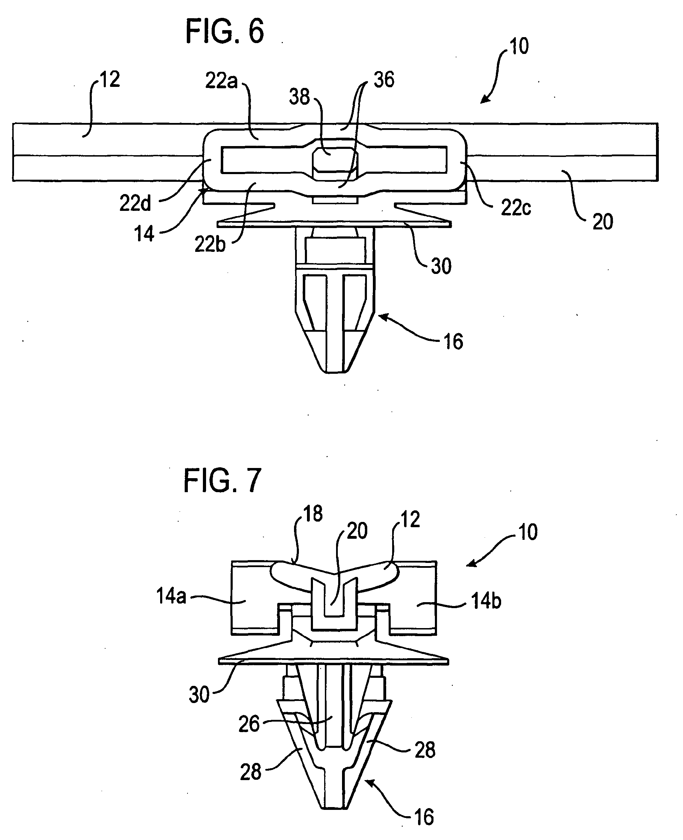

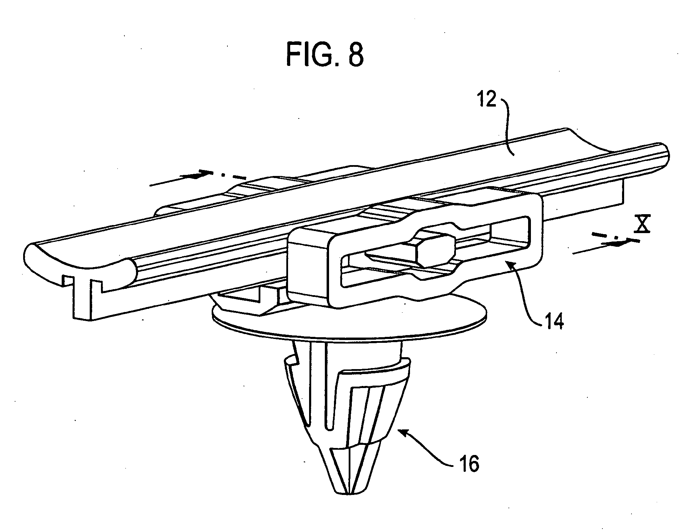

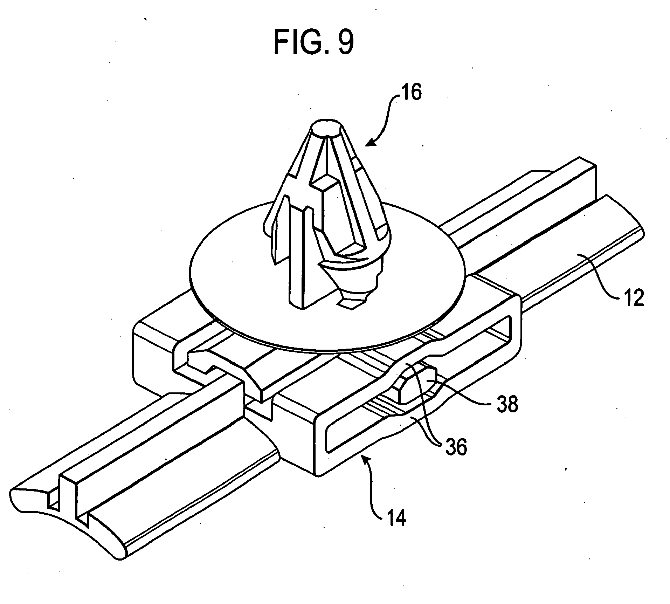

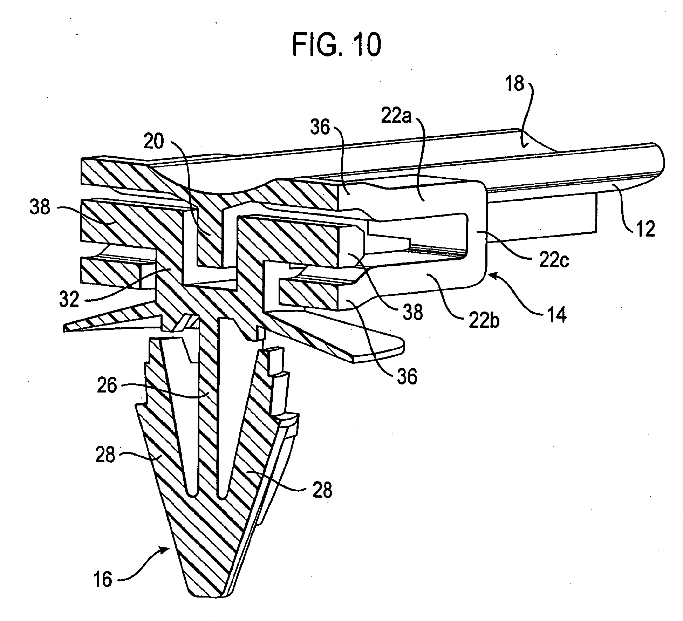

In den Figuren 6 bis 10 ist eine zweite Ausführungsform der erfindungsgemäßen Befestigungsvorrichtung 10 gezeigt. Die zweite Ausführungsform ist der zuvor beschriebenen ersten Ausführungsform sehr ähnlich, so daß in den Figuren insoweit die gleichen Bezugszeichen verwendet werden. Im folgenden wird nur der wesentliche Unterschied zur ersten Ausführungsform beschrieben.

Die Normalposition des Befestigungsabschnitts 16 ist hier nicht durch Vorsprünge am Rahmen 14 und Stegpaare des Befestigungsabschnitts 16 vorgegeben; vielmehr weisen die Rahmenabschnitte 14a und 14b vertikale Erweiterungen 36 auf, in denen Stege 38 des Befestigungsabschnitts 16 zu liegen kommen, die sich senkrecht zur Längsrichtung vom Profil 32 weg erstrecken und in den Rahmen 14 hineinragen.

## Patentansprüche

1. Befestigungsvorrichtung für eine Leitung, mit einer länglichen Schiene (12) und einem Befestigungsabschnitt (16), der eine Axialrichtung definiert, wobei die Schiene (12) auf einer Oberseite eine Auflagefläche (18) für die Leitung aufweist und der Befestigungsabschnitt (16) auf der der Oberseite entgegengesetzten Unterseite angeordnet und in einem Rahmen (14) verschiebbar gehalten ist, **dadurch gekennzeichnet, daß** auf der Unterseite der Schiene (12) ein Führungsnocken (20) angeformt ist, der einem im Querschnitt U-förmigen Profil (32) des Befestigungsabschnitts (16) gegenüberliegt.

2. Befestigungsvorrichtung nach Anspruch 1, **dadurch gekennzeichnet, daß** der Rahmen (14) zusammen mit der Schiene (12) einstückig ausgeführt ist.

3. Befestigungsvorrichtung nach Anspruch 1 oder 2, **dadurch gekennzeichnet, daß** die Auflagefläche (18) für die Leitung durchgehend ausgebildet ist.

4. Befestigungsvorrichtung nach einem der vorhergehenden Ansprüche, **dadurch gekennzeichnet, daß** der Befestigungsabschnitt (16) Stege (34; 38) aufweist, die sich senkrecht zur Längsrichtung der Schiene (12) erstrecken und in den Rahmen (14) hineinragen.

5. Befestigungsvorrichtung nach Anspruch 4, **dadurch gekennzeichnet, daß** Seitenwände (22a, 22b, 22c, 22d) des Rahmens (14) wenigstens einen Anschlag für die Stege (34; 38) bilden.

6. Befestigungsvorrichtung nach Anspruch 4 oder 5, **dadurch gekennzeichnet, daß** der Rahmen (14) so ausgebildet ist, daß er zusammenwirkend mit den Stegen (34; 38) eine stabile Normalposition für den Befestigungsabschnitt (16) vorgibt.

7. Befestigungsvorrichtung nach Anspruch 6, **dadurch gekennzeichnet, daß** der Rahmen (14) einander gegenüberliegende Vorsprünge (24a, 24b) aufweist, die zusammen mit den Stegen (34) eine Rastposition des Befestigungsabschnitts (16) definieren.

8. Befestigungsvorrichtung nach Anspruch 7, **dadurch gekennzeichnet, daß** der Abstand zwisc hen den Vorsprüngen (24a, 24b) geringfügig kleiner als die entsprechende Abmessung der Stege (34) ist.

9. Befestigungsvorrichtung nach Anspruch 6, **dadurch gekennzeichnet, daß** der Rahmen (14) Erweiterungen (36) aufweist, in denen die Stege (38) zu liegen kommen.

10. Befestigungsvorrichtung nach einem der Ansprüche 6 bis 10, **dadurch gekennzeichnet, daß** die Seitenwände (22a, 22b, 22c, 22d) einen Anschlag für das Profil (32) des Befestigungsabschnitts (16) bilden.

## Claims

1. A fastening device for a line, comprising an elongated track (12) and a fastening section (16) which defines an axial direction, the track (12) having on an upper side a support surface (18) for the line, and the fastening section (16) being arranged on the underside opposite the upper side and being displaceably held in a frame (14), **characterized in that** integrally formed with the underside of the track (12) is a guide cam (20) which is opposite a profile (32), U-shaped in cross-section, of the fastening section (16).

2. The fastening device according to claim 1, **characterized in that** the frame (14) is constructed in one piece together with the track (12).

3. The fastening device according to claim 1 or 2, **characterized in that** the support surface (18) for the line is formed so as to be continuous.

4. The fastening device according to any of the preceding claims, **characterized in that** the fastening section (16) has cross-pieces (34; 38) which extend perpendicularly to the longitudinal direction of the track (12) and project into the frame (14).

5. The fastening device according to claim 4, **characterized in that** side walls (22a, 22b, 22c, 22d) of the frame (14) form at least one stop for the cross-pieces (34; 38).

6. The fastening device according to claim 4 or 5, **characterized in that** the frame (14) is configured such that, cooperating with the cross-pieces (34; 38), it provides a stable normal position for the fastening section (16).

7. The fastening device according to claim 6, **characterized in that** the frame (14) has projections (24a, 24b) opposite each other, which together with the cross-pieces (34) define a detent position of the fastening section (16).

8. The fastening device according to claim 7, **characterized in that** the distance between the projections (24a, 24b) is slightly smaller than the corresponding dimension of the cross-pieces (34).

9. The fastening device according to claim 6, **characterized in that** the frame (14) has widened sections (36) in which the cross-pieces (38) come to lie.

10. The fastening device according to any of claims 6 to 10, **characterized in that** the side walls (22a, 22b, 22c, 22d) form a stop for the profile (32) of the fastening section (16).

## Revendications

1. Dispositif de fixation pour une conduite, comportant un rail allongé (12) et un tronçon de fixation (16) définissant une direction axiale, le rail (12) présentant sur une face supérieure une surface d'appui (18) pour la conduite, et le tronçon de fixation (16) étant agencé sur la face inférieure opposée à la face supérieure et étant retenu déplaçable dans un cadre (14), **caractérisé en ce qu'**une came de guidage (20) est moulée avec la face inférieure du rail (12) et est opposée à un profil (32) à section transversale en forme de U du tronçon de fixation (16).

2. Dispositif de fixation selon la revendication 1, **caractérisé en ce que** le cadre (14) est réalisé d'un seul tenant ensemble avec le rail (12).

3. Dispositif de fixation selon la revendication 1 ou 2, **caractérisé en ce que** la surface d'appui (18) pour la conduite est réalisée de manière à être continue.

4. Dispositif de fixation selon l'une des revendications précédentes, **caractérisé en ce que** le tronçon de fixation (16) présente des traverses (34 ; 38) qui s'étendent perpendiculairement à la direction longitudinale du rail (12) et font saillie dans le cadre (14).

5. Dispositif de fixation selon la revendication 4, **caractérisé en ce que** des parois latérales (22a, 22b, 22c, 22d) du cadre (14) forment au moins une butée pour les traverses (34 ; 38).

6. Dispositif de fixation selon la revendication 4 ou 5, **caractérisé en ce que** le cadre (14) est réalisé de manière à déterminer une position normale stable pour le tronçon de fixation (16) en coopérant avec les traverses (34 ; 38).

7. Dispositif de fixation selon la revendication 6, **caractérisé en ce que** le cadre (14) présente des saillies (24a, 24b) opposées l'une à l'autre qui, conjointement avec les traverses (34), définissent une position d'enclenchement du tronçon de fixation (16).

8. Dispositif de fixation selon la revendication 7, **caractérisé en ce que** la distance entre les saillies (24a, 24b) est légèrement inférieure au dimensionnement correspondant des traverses (34).

9. Dispositif de fixation selon la revendication 6, **caractérisé en ce que** le cadre (14) présente des évasements (36) dans lesquels les traverses (38) viennent se placer.

10. Dispositif de fixation selon l'une des revendications 6 à 10, **caractérisé en ce que** les parois latérales (22a, 22b, 22c, 22d) forment une butée pour le profil (32) du tronçon de fixation (16).
